# FASCICULE DE BREVET EUROPEEN

(11) **EP 2 911 556 B1**
(45) Date de publication et mention de la délivrance du brevet: **18.09.2019**
(21) Numéro de dépôt: 13789873.0
(22) Date de dépôt: 21.10.2013
(51) Int. Cl.: A47J 27/00, A47J 27/08, A47J 27/086, A23L 5/10

(54) **PROCÉDÉ DE COMMANDE D'UN CUISEUR A RIZ SOUS PRESSION**
VERFAHREN ZUM STEUERN EINES REISKOCHERS UNTER DRUCK
METHOD FOR CONTROLLING A RICE PRESSURE COOKER

(30) Priorité: 24.10.2012 FR 1260149
(43) Date de publication de la demande: 02.09.2015
(73) Titulaire: SEB S.A., 69130 Ecully (FR)
(72) Inventeur: SOBOLE, Céline, F-21260 Sacquenay (FR); JACOB, Sandrine, F-21000 Dijon (FR)
(74) Mandataire: Bourrières, Patrice
(86) Numéro de dépôt international: PCT/FR2013/052514
(87) Numéro de publication internationale: WO 2014/064378

(56) Documents cités:
- FR-A1- 2 966 710
- FR-A1- 2 966 711
- FR-A1- 2 966 711
- JP-A- 2000 308 571
- JP-A- 2003 290 032
- JP-A- 2004 321 215
- JP-A- 2005 046 492
- JP-A- 2010 004 918
- JP-A- 2011 218 004
- KR-B1- 100 662 890
- US-A1- 2011 003 048
- ALI S ZAKIUDDIN ET AL: "Changes in sugars and amino acids during parboiling of rice", JOURNAL OF FOOD BIOCHEMISTRY, vol. 4, no. 3, 1 October 1980 (1980-10-01) , pages 169-179, XP055074370, DOI: 10.1111/j.1745-4514.1980.tb00655.x
- XIAO-LI SHU ET AL: "Metabolite Profiling of Germinating Rice Seeds", JOURNAL OF AGRICULTURAL AND FOOD CHEMISTRY, vol. 56, no. 24, 24 December 2008 (2008-12-24), pages 11612-11620, XP055074368, ISSN: 0021-8561, DOI: 10.1021/jf802671p

## Description

La présente invention concerne un procédé de commande de cuiseur à riz sous pression et un cuiseur à riz blanc pour la mise en oeuvre d'un tel procédé. Le procédé selon l'invention est adapté pour la cuisson du riz blanc pour préserver les acides aminés constitutifs du riz tout en maintenant les qualités organoleptiques du riz.

Le but de l'invention est de proposer un procédé de commande d'un cuiseur à riz sous pression permettant d'augmenter la quantité d'au moins un des acides aminés du riz blanc cuit.

Ce but est atteint par l'intermédiaire d'un procédé de commande d'un cuiseur à riz blanc sous pression comprenant un boitier fermé par un couvercle, le boitier étant équipé d'un élément chauffant principal, d'une cuve placée dans le boitier, d'un élément chauffant le bord supérieur de la cuve, d'un élément chauffant le couvercle, d'une valve de dépressurisation pilotée, d'un premier capteur de température situé à proximité du fond de la cuve et d'un deuxième capteur de température placé dans le couvercle, le procédé étant caractérisé en ce qu'il comprend :
- Une étape de trempage pendant laquelle les éléments chauffants sont commandés pour maintenir pendant une durée comprise entre 10 et 40min, une température de consigne comprise entre 65 et 85°C à l'intérieur de la cuve;
- Une étape de chauffage démarrant à l'issue de la durée déterminée de trempage pendant laquelle, la valve de dépressurisation pilotée est en position fermée et les éléments chauffants sont commandés pour atteindre une température de consigne comprise entre 115 et 120°C à l'intérieur de la cuve,
- Une étape de cuisson, comprenant une première phase démarrant dès que la température de consigne est atteinte, pendant laquelle la valve de dépressurisation pilotée est maintenue en position fermée et les éléments chauffants sont commandés pour maintenir la température de consigne à l'intérieur de la cuve pendant une durée déterminée comprise entre 2 et 6 min.

Selon une autre variante de réalisation, le procédé comprend une deuxième phase de l'étape de cuisson pendant laquelle les éléments chauffants sont commandés pour maintenir la température de consigne à l'intérieur de la cuve inférieure à la température de cuisson de la première phase de l'étape de cuisson pendant une durée déterminée comprise entre 10 et 20 min.

Selon une autre variante de réalisation, le procédé comprend une étape d'attente pendant laquelle la valve de dépressurisation est maintenue en position ouverte, les éléments chauffants sont stoppés, et le couvercle est maintenu en position de fermeture pendant une période comprise entre 2 et 5 min.

Selon une autre variante de réalisation, la température de consigne de la première phase de l'étape de cuisson est comprise entre 116 et 118°C et la durée est d'environ 3 min.

Selon une autre variante de réalisation, la température de consigne de l'étape de trempage est de 70°C et la durée de l'étape de trempage est d'environ 26 min.

Selon une autre variante de réalisation, la température de consigne de la deuxième phase de l'étape de cuisson est de 105°C et la durée est de 15 min.

D'autres particularités et avantages de la présente invention apparaîtront dans la description ci-après de modes de réalisation donnés à titre d'exemples non limitatifs et illustrés par les dessins mis en annexe dans lesquels :
La figure 1 est une vue schématique d'un cuiseur à riz sous pression permettant de mettre en oeuvre le procédé selon l'invention,
La figure 2 représente le diagramme de température en fonction du temps correspondant au procédé de commande selon l'invention.
La figure 3 représente le diagramme de pression en fonction du temps correspondant au procédé de commande selon l'invention.

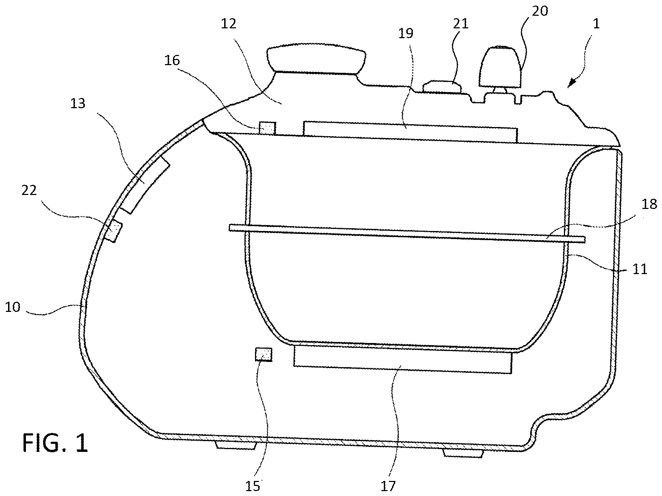

Un cuiseur à riz sous pression apte à mettre en oeuvre le procédé selon l'invention va à présent être décrit en référence à la figure 1.

Le cuiseur à riz 1 sous pression comprend, un corps principal 10 ou boîtier comprenant un logement dans lequel est insérée une cuve 11 interne pour cuire le riz. Le boitier est équipé d'un couvercle 12 monté articulé sur le boitier 10 de telle manière que la partie supérieure du corps principal est ouverte ou fermée par le couvercle 12. Un dispositif de commande 13 assurant les opérations de contrôle du cuiseur à riz 1 équipe également le boitier 10.

Le cuiseur à riz 1 comprend également le premier capteur 15 pour détecter la température de la partie inférieure de la cuve 11. Le premier capteur 15 est monté à proximité du fond de la cuve. Un second capteur 16 pour détecter la température de la face interne du couvercle 12 est monté sur le couvercle. Les premier et deuxième capteurs sont connectés au dispositif de commande 13.

Les moyens de chauffage du cuiseur à riz 1 comprennent un élément chauffant dit principal 17 fournissant une source de chauffage de manière à provoquer l'opération de trempage/cuisson et l'opération de maintien au chaud dans la cuve 11 du cuiseur à riz, un élément 18 chauffant le bord supérieur de la cuve 11 et un élément 19 chauffant la face interne du couvercle 12.

Le cuiseur à riz 1 sous pression comprend également une valve 20 de dépressurisation pilotée par le dispositif de commande 13. La valve 20 de dépressurisation est montée de façon connue en soi sur le couvercle 12.

De manière connue en soi le cuiseur à riz 1 peut comprendre une valve 21 de sécurité protégeant le cuiseur contre une élévation trop importante de la pression à l'intérieur du boitier 10.

Le boitier 10 ainsi que le couvercle sont par exemple en plastique.

Le dispositif de commande 13 est installé sur un côté intérieur du corps principal 10. Le dispositif de commande 13 est également connecté à des boutons de commande 22 permettant à un utilisateur de programmer le cuiseur.

Par ailleurs, le dispositif de commande 13 est connecté aux éléments de chauffage 17, 18, 19 pour les activer ou les désactiver en fonction d'une part d'un programme de cuisson choisi par l'utilisateur et d'autre part des mesures de température relevées par les deux capteurs 15, 16.

Selon une variante de réalisation, l'élément chauffant principal 17 est de type induction alors que l'élément 18 chauffant le bord supérieur de la cuve 11 et l'élément 19 chauffant le couvercle 12 sont de type résistif.

Le procédé de commande du cuiseur à riz blanc 1 selon l'invention permet la cuisson du riz blanc permettant de préserver au moins un acide aminé dans le riz blanc cuit. Selon les tests réalisés par la demanderesse les quantités des trois acides aminés, glutamine, ornithine et proline ont été augmentées par rapport un procédé de cuisson classique du riz blanc.

Ainsi, la demanderesse a constaté que l'application de procédé selon l'invention permettait de multiplier environ par deux la quantité de glutamine et de proline dans le riz blanc cuit par rapport à un procédé de cuisson classique. La quantité de ornithine a elle été multipliée par trois au moins.

La demanderesse a constaté que la quantité des acides aminés du riz est augmentée en appliquant préalablement à la cuisson, une phase de trempage. Cette phase de trempage permet de modifier la structure des complexes d'amidon pendant la phase de trempage et ainsi d'augmenter leur température de fusion pendant la phase de cuisson et donc de limiter leur hydrolyse pendant la phase de cuisson.

L'étape de trempage a une durée limitée. En effet, une phase de trempage trop longue dégrade les caractéristiques organoleptiques du riz. En effet, lors de la phase de trempage, le riz absorbe de l'eau. Si lors de la l'étape de cuisson le niveau de l'eau contenue dans la cuve est en dessous du niveau du riz, alors une partie du riz ne sera pas correctement cuite. Ainsi, en limitant la durée de trempage le riz blanc conserve ses qualités organoleptiques telles qu'un moelleux et une texture collante satisfaisants.

Le procédé de cuisson comprend une étape de cuisson en deux phases. Les paramètres de cuisson (température et durée) de la première phase sont déterminés pour obtenir un riz d'aspect brillant.

Par ailleurs, lors de la deuxième phase de l'étape de cuisson, afin de protéger les acides aminés, la température de cuisson sera plus basse que celle habituellement utilisée pour la cuisson du riz blanc.

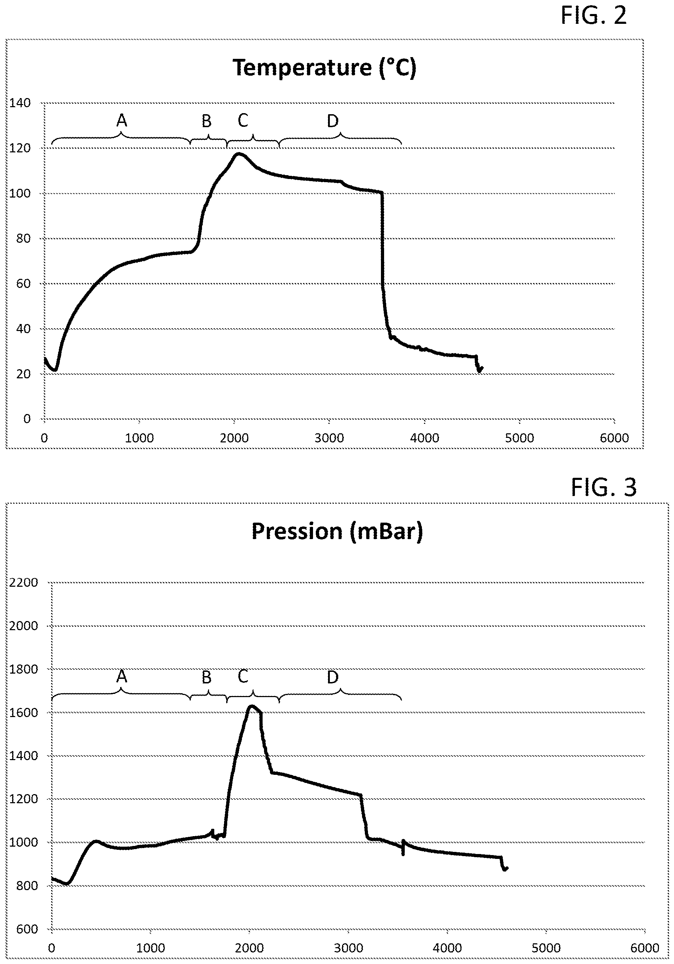

Les figures 2 et 3 représentent le diagramme température et pression en fonction du temps lors de la mise en oeuvre d'une étape de trempage du procédé selon l'invention.

Le procédé de commande selon l'invention permet de réaliser le trempage et la cuisson du riz blanc dans le cuiseur à riz sans intervention de l'utilisateur au cours du cycle de préparation.

Pour la préparation d'un riz blanc à teneur préservée en acide aminés, l'utilisateur introduit dans la cuve du cuiseur à riz sous pression une quantité déterminée de riz et d'eau. Ces quantités sont par exemple indiquées par des niveaux identifiés sur la surface intérieure de la cuve. Les courbes représentées aux figures 2 et 3 ont été réalisées pour une quantité de riz de 600 g et une quantité d'eau de 700 g.

L'étape principale du procédé de commande selon l'invention est une étape de trempage A. Au cours de cette étape, la valve 20 de dépressurisation peut être en position ouverte ou fermée. En effet, compte tenu de la température de trempage il n'y a pas ou peu de dégagement de vapeur et donc pas d'élévation de la température. En fait, aucun signal n'est envoyé à la valve de dépressurisation.

Par ailleurs, tout ou partie des éléments chauffants 17, 18, 19 est activé de façon à maintenir une température à l'intérieur de la cuve 11 comprise entre 65 et 85°C. En d'autres termes, une boucle de régulation des éléments chauffants 17, 18, 19 sur le signal du premier capteur 15 de température situé dans le fond de la cuve 11 est mise en oeuvre. La durée de l'étape de trempage est limitée à 40 min avec une durée minimale de 10 min. Selon une autre variante de réalisation, l'élément chauffant 19 placé dans le couvercle est désactivé durant toute l'étape de trempage. Selon un mode préféreré du procédé selon l'invention la température de trempage est de 70°C et la durée de trempage est d'environ 26min.

A l'issue de l'étape de trempage, c'est-à-dire après que la durée de trempage choisie par l'utilisateur soit écoulée, une étape de chauffage B est enclenchée automatiquement. L'étape de chauffage consiste à atteindre une température de consigne déterminée comprise entre 116 et 118°C à l'intérieur de la cuve 11. Pour ce faire, le dispositif de commande 13 active tous les éléments chauffants 17, 18, 19 du cuiseur à riz 1 tant que le signal du deuxième capteur 16 situé dans le couvercle 12 n'indique pas la température de consigne.

Cette étape de chauffage est réalisée en maintenant la valve 20 de dépressurisation en position fermée. La vitesse de montée en température est par exemple comprise entre 3 et 7°C/min.

Une fois la température de consigne atteinte une première phase C de l'étape de cuisson débute. La durée de cette première phase C de l'étape de cuisson est courte au regard de la durée totale du cycle de cuisson. Selon l'invention la température de consigne de la première phase de cuisson est maintenue pendant une durée comprise entre 2 et 6 minutes. La demanderesse a constaté que pour obtenir une brillance de riz blanc optimale la durée de la première phase C de l'étape de cuisson était d'environ 3 min.

L'étape de cuisson proprement dite est réalisée dans une deuxième phase D de l'étape de cuisson. Cette deuxième phase D de l'étape de cuisson débute dès que la durée de la première phase C est écoulée. La température de cuisson de la deuxième phase D est plus basse que celle de la première phase C de l'étape de cuisson. Selon l'invention, la température de consigne de la deuxième phase D de l'étape de cuisson est d'environ 105°C.

Pour atteindre la température de consigne de la deuxième phase de cuisson, les éléments chauffants 17, 18, 19 sont désactivés jusqu'à ce que la température diminue jusqu'à la température souhaitée. Ensuite, une boucle de régulation des éléments chauffants 17, 18, 19 sur le signal du deuxième capteur 16 de température du couvercle 12 est déclenchée pour maintenir la température de consigne. Durant toute la deuxième phase D de l'étape de cuisson, la valve 20 de dépressurisation est pilotée pour maintenir un niveau de pression supérieure à la pression atmosphérique mais inférieure à la pression de la première phase C de l'étape de cuisson. Pour ce faire la valve 20 de dépressurisation passe de la position ouverte à la position fermée par intermittence.

Il est également possible d'atteindre la température de consigne de la deuxième phase de cuisson en opérant une décompression par à-coups de l'enceinte de cuisson. Cette décompression est réalisée en actionnant la valve 20 de dépressurisation par intermittence.

La deuxième phase D de l'étape de cuisson est maintenue pendant une durée comprise entre 10 et 20 minutes et de préférence 15minutes. Dès que la durée de cuisson est écoulée les éléments chauffants 17, 18, 19 sont désactivés.

Lorsque l'étape de cuisson est réalisée avec la valve 20 de dépressurisation en position fermée, celle-ci est alors ouverte par intermittence dès que la durée de cuisson est écoulée. Cette ouverture par intermittence permet d'éviter un bruit d'échappement de vapeur continu et accessoirement le débordement de la cuve 11. Le cycle d'ouverture dure environ une minute alors que le cycle de fermeture ne dure que quelques secondes et ainsi de suite jusqu'à ce que la pression à l'intérieur de la cuve 11 soit équilibrée avec la pression ambiante.

Après la décompression totale de l'enceinte de cuisson, une étape d'attente de quelques minutes, de préférence 3 min, est déclenchée avant l'ouverture du couvercle 12. Cette étape d'attente permet le repos du riz.

Un dispositif de commande 13 spécialement adapté pour réaliser le procédé selon l'invention est connecté aux éléments chauffants, aux capteurs et à la valve de dépressurisation et comprend une mémoire pour stocker les différentes séquences de programme correspondant à l'exécution du procédé selon l'invention.

L'invention n'est pas limitée à l'exemple de réalisation décrit ci-dessous. Ainsi, les capteurs de température peuvent être placés différemment dans le cuiseur à riz. Par ailleurs, les signaux transmis par les capteurs peuvent être utilisés indifféremment pour réguler la température de consigne de cuisson ou de trempage. La différence entre les deux modes de fonctionnement réside dans l'interpolation effectuée par le dispositif de commande pour déterminer la température régnant à l'intérieur de la cuve.

## Revendications

1. Procédé de commande d'un cuiseur à riz blanc sous pression comprenant un boitier (10) fermé par un couvercle, le boitier (10) étant équipé d'un élément chauffant (17) principal, d'une cuve (11) placée dans le boitier (10), d'un élément (18) chauffant le bord supérieur de la cuve (11), d'un élément (19) chauffant le couvercle (12), d'une valve (20) de dépressurisation pilotée, d'un premier capteur (15) de température situé à proximité du fond de la cuve (11) et d'un deuxième capteur (16) de température placé dans le couvercle (12), le procédé étant **caractérisé en ce qu'**il comprend :
- Une étape de trempage (A) pendant laquelle les éléments chauffants (17, 18, 19) sont commandés pour maintenir pendant une durée comprise entre 10 et 40min, une température de consigne comprise entre 65 et 85°C à l'intérieur de la cuve (11) ;
- Une étape de chauffage (B) démarrant à l'issue de la durée déterminée de trempage pendant laquelle, la valve (20) de dépressurisation pilotée est en position fermée et les éléments chauffants (17, 18, 19) sont commandés pour atteindre une température de consigne comprise entre 115 et 120°C à l'intérieur de la cuve (11) ;
- Une étape de cuisson, comprenant une première phase (C) démarrant dès que la température de consigne est atteinte, pendant laquelle la valve (20) de dépressurisation pilotée est maintenue en position fermée et les éléments chauffants (17, 18, 19) sont commandés pour maintenir la température de consigne à l'intérieur de la cuve (11) pendant une durée déterminée comprise entre 2 et 6 min.

2. Procédé de commande d'un cuiseur à riz blanc sous pression selon la revendication 1 **caractérisé en ce que** le procédé comprend une deuxième phase (D) de l'étape de cuisson pendant laquelle les éléments chauffants (17, 18, 19) sont commandés pour maintenir la température de consigne à l'intérieur de la cuve inférieure à la température de cuisson de la première phase de l'étape de cuisson pendant une durée déterminée comprise entre 10 et 20 min.

3. Procédé de commande d'un cuiseur à riz blanc sous pression selon la revendication 2 **caractérisé en ce que** la température de consigne de la deuxième phase (D) de l'étape de cuisson est de 105°C et la durée est de 15 min.

4. Procédé de commande d'un cuiseur à riz blanc sous pression selon l'une des revendications précédentes **caractérisé en ce qu'**il comprend une étape d'attente pendant laquelle la valve (20) de dépressurisation est maintenue en position ouverte, les éléments chauffants (17, 18, 19) sont stoppés, et le couvercle est maintenu en position de fermeture pendant une période comprise entre 2 et 5 min.

5. Procédé de commande d'un cuiseur à riz blanc sous pression selon l'une des revendications précédentes **caractérisé en ce que** la température de consigne de la première phase (C) de l'étape de cuisson est comprise entre 116 et 118°C et la durée est d'environ 3 min.

6. Procédé de commande d'un cuiseur blanc à riz sous pression selon l'une des revendications précédentes **caractérisé en ce que** la température de consigne de l'étape de trempage est de 70°C et la durée de l'étape de trempage est d'environ 26 min.

## Patentansprüche

1. Verfahren zum Steuern eines Kochers für weißen Reis unter Druck, umfassend ein Gehäuse (10), das durch einen Deckel verschlossen ist, wobei das Gehäuse (10) mit einem Hauptheizelement (17), einem in dem Gehäuse (10) platzierten Behälter (11), einem Heizelement (18) für den oberen Rand des Behälters (11), einem Heizelement (19) für den Deckel (12), einem gesteuerten Druckentlastungsventil (20), einem ersten Temperatursensor (15), der sich in der Nähe des Bodens des Behälters (11) befindet, und einem zweiten Temperatursensor (16), der in dem Deckel (12) platziert ist, ausgestattet ist, wobei das Verfahren **dadurch gekennzeichnet ist, dass** es umfasst:
- einen Eintauchschritt (A), während dem die Heizelemente (17, 18, 19) so gesteuert werden, dass für eine Dauer zwischen 10 und 40 Minuten eine Solltemperatur zwischen 65 und 85 °C im Inneren des Behälters (11) beibehalten wird;
- einen Heizschritt (B), der am Ende der ermittelten Eintauchdauer beginnt, während der das gesteuerte Druckentlastungsventil (20) in der geschlossenen Position ist und die Heizelemente (17, 18, 19) gesteuert werden, um eine Solltemperatur zwischen 115 und 120 °C im Inneren des Behälters (11) zu erreichen;
- einen Kochschritt, der eine erste Phase (C) umfasst, die beginnt, sobald die Solltemperatur erreicht ist, während der das gesteuerte Druckentlastungsventil (20) in der geschlossenen Position beibehalten wird und die Heizelemente (17, 18, 19) gesteuert werden, um die Solltemperatur innerhalb des Behälters (11) für einen festgelegten Zeitraum zwischen 2 und 6 Minuten beizubehalten.

2. Verfahren zum Steuern eines Kochers für weißen Reis unter Druck nach Anspruch 1, **dadurch gekennzeichnet, dass** das Verfahren eine zweite Phase (D) des Kochschritts umfasst, während der die Heizelemente (17, 18, 19) gesteuert werden, um die Solltemperatur im Inneren des Behälters niedriger als die Kochtemperatur der ersten Phase des Kochschritts für einen festgelegten Zeitraum zwischen 10 und 20 min. beizubehalten.

3. Verfahren zum Steuern eines Kochers für weißen Reis unter Druck nach Anspruch 2, **dadurch gekennzeichnet, dass** die Solltemperatur der zweiten Phase (D) des Kochschritts 105 °C ist und die Dauer 15 min. ist.

4. Verfahren zum Steuern eines Kochers für weißen Reis unter Druck nach einem der vorhergehenden Ansprüche, **dadurch gekennzeichnet, dass** es einen Warteschritt umfasst, während dem das Druckentlastungsventil (20) in der offenen Position beibehalten wird, die Heizelemente (17, 18, 19) angehalten werden und der Deckel in der geschlossenen Position für einen Zeitraum zwischen 2 und 5 min. beibehalten wird.

5. Verfahren zur Steuerung eines Kochers für weißen Reis unter Druck nach einem der vorhergehenden Ansprüche, **dadurch gekennzeichnet, dass** die Solltemperatur der ersten Phase (C) des Kochschritts zwischen 116 und 118 °C ist und die Dauer ca. 3 min. ist.

6. Verfahren zur Steuerung eines Kochers für weißen Reis unter Druck nach einem der vorhergehenden Ansprüche, **dadurch gekennzeichnet, dass** die Solltemperatur des Eintauchschritts 70 °C ist und die Dauer des Eintauchschritts etwa 26 min. ist.

## Claims

1. Method for controlling a pressurised white-rice cooker comprising a casing (10) closed by a lid, the casing (10) being equipped with a main heating element (17), with a vessel (11) placed in the casing (10), with an element (18) heating the top edge of the vessel (11), with an element (19) heating the lid (12), with a controlled depressurisation valve (20), with a first temperature sensor (15) situated in the vicinity of the bottom of the vessel (11) and with a second temperature sensor (16) placed in the lid (12), the method being **characterised in that** it comprises:
- a soaking step (A) during which the heating elements (17, 18, 19) are controlled so as to maintain, for a period of between 10 and 40 minutes, a set temperature of between 65 and 85°C inside the vessel (11);
- a heating step (B) starting at the end of the given soaking period during which the controlled depressurisation valve (20) is in the closed position and the heating elements (17, 18, 19) are controlled so as to achieve a set temperature of between 115 and 120°C inside the vessel (11);
- a cooking step, comprising a first phase (C) starting as soon as the set temperature is reached, during which the controlled depressurisation valve (20) is maintained in the closed position and the heating elements (17, 18, 19) are controlled so as to maintain the set temperature inside the vessel (11) for a given period of between 2 and 6 minutes.

2. Method for controlling a pressurised white-rice cooker according to claim 1, **characterised in that** the method comprises a second phase (D) of the cooking step during which the heating elements (17, 18, 19) are controlled so as to maintain the set temperature inside the vessel below the cooking temperature of the first phase of the cooking step for a given period of between 10 and 20 minutes.

3. Method for controlling a pressurised white-rice cooker according to claim 2, **characterised in that** the set temperature of the second phase (D) of the cooking step is 105°C and the period is 15 minutes.

4. Method for controlling a pressurised white-rice cooker according to any of the preceding claims, **characterised in that** it comprises a waiting step during which the depressurisation valve (20) is maintained in the open position, the heating elements (17, 18, 19) are stopped, and the lid is maintained in the closed position for a period of between 2 and 5 minutes.

5. Method for controlling a pressurised white-rice cooker according to any of the preceding claims, **characterised in that** the set temperature of the first phase (C) of the cooking step is between 116 and 118°C and the period is approximately 3 minutes.

6. Method for controlling a pressurised white-rice cooker according to any of the preceding claims, **characterised in that** the set temperature of the soaking step is 70°C and the duration of the soaking step is approximately 26 minutes.
